# EUROPÄISCHE PATENTSCHRIFT

(11) **EP 4 321 412 B1**
(45) Veröffentlichungstag und Bekanntmachung des Hinweises auf die Patenterteilung: **15.10.2025**
(21) Anmeldenummer: 23184742.7
(22) Anmeldetag: 11.07.2023
(51) Int. Cl.: B62D 1/181

(54) **VERSTELLANTRIEB FÜR EINE MOTORISCH VERSTELLBARE LENKSÄULE UND LENKSÄULE FÜR EIN KRAFTFAHRZEUG**
ADJUSTMENT DRIVE FOR A MOTOR-DRIVEN ADJUSTABLE STEERING COLUMN AND STEERING COLUMN FOR A MOTOR VEHICLE
ENTRAÎNEMENT DE RÉGLAGE POUR UNE COLONNE DE DIRECTION RÉGLABLE PAR MOTEUR ET COLONNE DE DIRECTION POUR UN VÉHICULE AUTOMOBILE

(30) Priorität: 22.07.2022 BE 202205586
(43) Veröffentlichungstag der Anmeldung: 14.02.2024
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Nessler, Christoph, 6800 Feldkirch (AT); Specht, Jean-Pierre, 9469 Haag (CH); Lins, Mathias, 9450 Lüchingen (CH)
(74) Vertreter: thyssenkrupp Intellectual Property GmbH

(56) Entgegenhaltungen:
- EP-A1- 0 752 359
- DE-C2- 3 890 516

## Beschreibung

### Stand der Technik

Die Erfindung betrifft einen Verstellantrieb für eine motorisch verstellbare Lenksäule für ein Kraftfahrzeug, umfassend einen Spindeltrieb mit einer in eine Spindelmutter eingreifenden Gewindespindel mit einer Spindelachse, und einen elektrischen Motor mit einer um eine Motorachse drehend antreibbaren Motorwelle, wobei die Motorwelle über ein Zahnradgetriebe mit der Spindelmutter oder der Gewindespindel getriebemäßig gekuppelt ist, wobei ein auf der Motorwelle drehfest angebrachtes Antriebsrad mit einem mit der Spindelmutter oder der Gewindespindel drehfest verbundenen Abtriebsrad in direktem Getriebeeingriff steht. Eine Lenksäule mit einem derartigen Verstellantrieb ist ebenfalls Gegenstand der Erfindung.

Lenksäulen für Kraftfahrzeuge weisen eine Lenkspindel auf, an deren in Fahrtrichtung hinteren, dem Fahrer zugewandten Ende eine Lenkhandhabe, beispielsweise ein Lenkrad zur Einbringung von manuellen Lenkbefehlen angebracht ist. Die Lenkspindel ist um ihre Längsachse in einer Stelleinheit drehbar gelagert, die von einer Trageinheit an der Fahrzeugkarosserie gehalten ist. Die Stelleinheit kann in einer mit der Trageinheit verbundenen Manteleinheit, auch als Führungskasten oder Kastenschwinge bezeichnet, in Richtung der Längsachse teleskopartig verschiebbar aufgenommen sein, so dass eine Längsverstellung erfolgen kann. Eine Höhenverstellung kann dadurch realisiert werden, dass die Stelleinheit oder eine diese aufnehmende Manteleinheit in Höhenrichtung schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einem elektrischen Motor vorzusehen, der einen Spindeltrieb antreibt, der eine in eine Spindelmutter eingeschraubte Gewindespindel umfasst, die sich in Richtung einer Spindelachse erstreckt. Durch den Motor sind die Gewindespindel und die Spindelmutter gegeneinander um die Spindelachse drehend antreibbar, wodurch die Gewindespindel und die Spindelmutter je nach Drehrichtung translatorisch aufeinander zu oder voneinander wegbewegt werden können.

Bei einem gattungsgemäßen Verstellantrieb wird das Antriebsmoment des Motors über ein Zahnradgetriebe von der Motorwelle auf den Spindeltrieb übertragen, wie dies im Stand der Technik beispielsweise in der DE 10 2017 127 566 A1. Dieses umfasst ein Antriebsrad, ein Abtriebsrad und mindestens ein dazwischen angeordnetes Zwischenrad. Dadurch wird eine parallele Anordnung von Motorachse und Spindelachse ermöglicht. Davon abweichende Achsorientierungen sind jedoch nur eingeschränkt oder mit relativ großem baulichen Aufwand möglich, da beispielsweise bei einem eingesetzten Zwischenrad lediglich eine windschiefe, versetzte Achsorientierung möglich ist. Nachteilig bei dem bekannten Zahnradgetriebe ist zudem die relativ hohe Anzahl der Bauteile, der hohe Bauraumbedarf und der begrenzte Wirkungsgrad.

Ein Verstellantrieb mit den gattungsgemäßen Merkmalen ist beispielsweise aus der EP 0 752 359 A1 oder der DE 38 90 516 C2 bekannt.

Angesichts der vorangehend erläuterten Problematik ist es eine Aufgabe der vorliegenden Erfindung, eine optimierte Achsorientierung bei einer kompakten Bauweise und möglichst hohem Wirkungsgrad zu ermöglichen.

### Darstellung der Erfindung

Diese Aufgabe wird erfindungsgemäß gelöst durch den Verstellantrieb mit den Merkmalen des Anspruchs 1 und die Lenksäule gemäß Anspruch 7. Vorteilhafte Weiterbildungen ergeben sich aus den Unteransprüchen.

Bei einem Verstellantrieb für eine motorisch verstellbare Lenksäule für ein Kraftfahrzeug, umfassend einen Spindeltrieb mit einer in eine Spindelmutter eingreifenden Gewindespindel mit einer Spindelachse, und einen elektrischen Motor mit einer um eine Motorachse drehend antreibbaren Motorwelle, wobei die Motorwelle über ein Zahnradgetriebe mit der Spindelmutter oder der Gewindespindel getriebemäßig gekuppelt ist, wobei ein auf der Motorwelle drehfest angebrachtes Antriebsrad mit einem mit der Spindelmutter oder der Gewindespindel drehfest verbundenen Abtriebsrad in direktem Getriebeeingriff steht, ist erfindungsgemäß vorgesehen, dass der zwischen Spindelachse und Motorachse eingeschlossene Achswinkel (α) größer als 0° und kleiner als 30° ist.

Das Zahnradgetriebe ist einstufig ausgebildet, und weist definitionsgemäß ein aus genau zwei Zahnrädern, nämlich dem auf der Motorwelle angebrachten Antriebsrad und dem mit dem direkt mit der Gewindespindel oder der Spindelmutter verbundenen Abtriebsrad gebildetes Zahnradpaar auf. Das Antriebrad kämmt direkt mit dem Abtriebsrad. Es ist insbesondere kein Zwischenrad zwischen eingesetzt, so dass die im Stand der Technik auftretenden Nachteile vermieden werden können. Vorteilhaft ist insbesondere, dass eine kompaktere und leichtere Bauweise bei einem höheren Wirkungsgrad realisierbar ist.

Das Abtriebsrad weist in der Regel eine größere Zähnezahl auf als das auch als Ritzel bezeichnete Antriebsrad, so dass in an sich bekannter Weise die Motordrehzahl zum Antrieb des Spindeltriebs herangesetzt wird.

Erfindungsgemäß ist vorgesehen, dass die Spindelachse und die Motorachse schräg zueinander stehen und sich in einem Schnittpunkt schneiden. Die Motorachse und die Spindelachse verlaufen dabei nichtparallel in einer Ebene, so dass sie sich in einem Schnittpunkt schneiden. Dieser Schnittpunkt liegt in Achsrichtung der Motorachse vor der motorfernen Seite des Antriebsrads auf der Spindelachse. Die schräge Anordnung ohne linearen Versatz ermöglicht eine platzsparend optimierte, besonders schlanke Bauform einer Lenksäule, bei der sich der Motor beispielsweise schräg an die zur Spindelachse parallele Längsachse anschmiegen kann. Eine derartige Anordnung ist bei dem eingangs genannten Stand der Technik mit einem Zwischenrad nicht ohne weiteres realisierbar, und durch den dabei erforderlichen Einsatz weiterer Zwischenrädern steigt der Aufwand und der Bauraumbedarf weiter an, bei abnehmendem Wirkungsgrad.

Alternativ zu der vorgenannten Ausführung ist es möglich, dass die Spindelachse und die Motorachse windschief relativ zueinander stehen. Dabei sind diese schräg gegeneinander ausgerichtet, schneiden sich jedoch nicht. Diese Anordnung ermöglicht, den Motor relativ zur Gewindespindel derart verkippt anzuordnen, dass eine optimierte Anpassung an den zur Verfügung stehenden Bauraum ermöglicht wird. Ein Vorteil der erfindungsgemäßen Ausgestaltung ist, dass auch dabei eine besonders schlanke Bauform realisiert werden kann.

Es ist vorteilhaft, dass der zwischen Spindelachse und Motorachse eingeschlossene Achswinkel α größer als 0° und kleiner als 30° ist. Dadurch stehen die Gewindespindel und die Motorwelle in einem spitzen Winkel zueinander, der die vorteilhafte, schlank zusammenlaufende Bauform der Lenksäule ermöglicht, bei der die Spindelachse im Wesentlichen parallel zur Längsachse verlaufen kann.

Eine vorteilhafte Weiterbildung kann vorsehen, dass der zwischen Spindelachse und Motorachse eingeschlossene Achswinkel kleiner ist als 15°.

In einer bevorzugten Ausführung kann vorgesehen sein, dass das Zahnradgetriebe als Kronradgetriebe ausgebildet ist. Bei einem auch als Kronenradgetriebe bezeichneten Kronradgetriebe kann das Abtriebsrad als geradverzahntes Kronenrad ausgebildet sein, in das ein als herkömmliches geradverzahntes Stirnrad ausgebildetes Antriebsrad eingreift. Vorteile gegenüber anderen Bauformen von Winkelgetrieben sind ein hoher Wirkungsgrad, und der weitgehende Wegfall von axialer Belastung des Antriebsrads und damit der Motorwelle. Entsprechend kann die Lagerung der Motorwelle weniger aufwendig sein. Darüber hinaus lässt das Kronenrad ohne zusätzliche Maßnahmen eine axiale Verlagerung des Antriebsrads zu, so dass beispielsweise thermische Ausdehnungen oder Maß- oder Montagetoleranzen ohne zusätzlichen Aufwand kompensiert werden können. Eine Schrägverzahnung kann ebenfalls realisiert sein.

Kronradgetriebe ermöglichen allgemein einen Achswinkel zwischen 0° und 180°, so dass eine Anpassung an einen erfindungsgemäß vorteilhaften spitz zulaufenden Achswinkel problemlos möglich ist.

Es ist alternativ ebenfalls denkbar und möglich, dass das Zahnradgetriebe als Kegelradgetriebe ausgebildet ist.

Es ist möglich, dass der Spindeltrieb als Tauchspindeltrieb oder als Rotationsspindeltrieb ausgebildet ist. Die Vorteile des erfindungsgemäßen Antriebs können dadurch mit den bauartspezifischen Besonderheiten optimal kombiniert werden.

Bei einem Rotationsspindelantrieb ist die Gewindespindel von dem Motor, der feststehend mit der Stelleinheit oder der Trageinheit verbunden ist, drehend antreibbar und greift in die Spindelmutter ein, die an der Trageinheit oder alternativ an der Stelleinheit bezüglich Drehung um die Spindelachse feststehend angebracht ist. In Richtung der Spindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt.

Bei einem Tauchspindelantrieb ist die Gewindespindel bezüglich Drehung um die Spindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie beim Rotationsspindelantrieb stützt sich die Gewindespindel an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit drehend angetrieben wird. Durch den rotatorischen Antrieb der Gewindespindel wird eine translatorische Verstellung von Trageinheit und Stelleinheit relativ zueinander in Richtung der Gewindespindelachse bewirkt.

Bei einer motorisch verstellbaren Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, ist erfindungsgemäß vorgesehen, dass der Verstellantrieb ausgebildet ist gemäß einer der vorangehend beschriebenen Ausführungsformen oder Kombinationen davon.

Durch den erfindungsgemäßen Antrieb über eine einzige Getriebestufe kann eine besonders bauraumsparende, leichte und effiziente Bauweise realisiert werden.

Es ist vorteilhaft, dass der Verstellantrieb zur Längsverstellung in Richtung der Längsachse zwischen der Stelleinheit und der Trageinheit angeordnet ist. Die Spindelachse des erfindungsgemäßen Verstellantriebs kann dabei vorzugsweise parallel oder zumindest im Wesentlichen parallel zur Längsachse angeordnet sein, welche die Längsrichtung angibt. Beispielsweise kann die Stelleinheit teleskopartig verstellbar in einer von der Trageinheit gehaltenen Manteleinheit aufgenommen sein. Dabei kann eine Teleskopanordnung mit zwei oder mehr teleskopierbaren Mantelrohren vorgesehen sein, wobei der Verstellantrieb in Längsrichtung an den Mantelrohren angreifen kann. In dieser Längsanordnung kann eine erfindungsgemäß schlank schräg zusammenlaufende Bauform vorteilhaft flexibel an den im Kraftfahrzeug zur Verfügung stehenden Bauraum angepasst werden.

Es ist zusätzlich oder alternativ möglich, dass der Verstellantrieb zur Höhenverstellung quer zur Längsachse zwischen der Stelleinheit und der Trageinheit angeordnet ist.

Bevorzugt kann vorgesehen sein, dass die Spindelachse und die Motorachse sich in einem Schnittpunkt schneiden, der innerhalb der Längserstreckung der Lenksäule liegt. Dadurch kann der Bauraumbedarf besonders optimiert werden. Es hat sich nämlich überraschenderweise herausgestellt, dass eine mögliche Verlagerung des Schnittpunkts außerhalb der Längserstreckung der Lenksäule, die eine Annäherung an parallele Ausrichtung von Motor- und Spindelachse bedeutet, keine Vorteile bringt, und die oben genannten vorteilhaften Wirkungen abschwächen kann.

Zur Realisierung der vorgenannten Ausführung kann es insbesondere vorteilhaft sein, dass die Spindelachse und die Motorachse sich in einem Schnittpunkt schneiden, der zwischen einem hinteren Anbindungsabschnitt der Lenkspindel und einem vorderen Befestigungsabschnitt der Trageinheit liegt. An dem bezüglich der Einbaulage in Fahrtrichtung hinteren, der Fahrerposition zugewandten Anbindungsabschnitt kann eine manuelle Lenkhandhabe befestigt werden, beispielsweise ein Lenkrad. Der Befestigungsabschnitt befindet sich in Längsrichtung von dem Anbindungsabschnitt beabstandet in dem vorderen Abschnitt der Lenksäule. Beispielsweise kann der Befestigungsabschnitt eine Höhenverstellachse aufweisen, um welche die Stelleinheit oder eine diese aufnehmende Manteleinheit in Höhenrichtung verschwenkbar an der Trageinheit gelagert ist. Der Schnittpunkt kann bevorzugt zwischen dieser Höhenverstellachse und dem Anbringungsabschnitt liegen. Der genannte Längsabschnitt zwischen Anbindungsabschnitt und Höhenverstellachse bietet eine vorteilhafte Definition für die vorgenannte Längserstreckung der Lenksäule.

Es kann mit Vorteil vorgesehen sein, dass die erfindungsgemäße Lenksäule als Steer-by-Wire-Lenksäule ausgebildet ist. Diese weist keine durchgehende mechanische Verbindung der Lenkspindel mit den zu lenkenden Rädern auf. Stattdessen wirkt die Lenkspindel mit Drehsensoren oder anderen Eingabemitteln zusammen, welche einen manuell eingegebenen Lenkbefehl in ein elektrisches Steuersignal umsetzen, welches zur Ansteuerung von elektrischen Lenkaktuatoren dient, die einen entsprechenden Lenkeinschlag der Räder einstellen. Vorteilhaft ist in jedem Fall der einfache und kompakte Aufbau.

Es ist alternativ ebenfalls möglich, einen erfindungsgemäßen Verstellantrieb an einer konventionellen, über eine Lenkwelle mechanisch gekoppelten Lenkung vorzusehen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksystem in einer schematischen perspektivischen Ansicht,
- Figur 2: eine erfindungsgemäße Lenksäule in einer schematischen perspektivischen Ansicht,
- Figur 3: die Lenksäule gemäß Figur 2 in einer Seitenansicht,
- Figur 4: ein erfindungsgemäßer Verstellantrieb in einer schematischen perspektivischen Darstellung,
- Figur 5: eine Seitenansicht des Verstellantriebs gemäß Figur 4,
- Figur 6: eine vergrößerte Detailansicht aus Figur 5,
- Figur 7: eine Lenksäule mit einem erfindungsgemäßen Verstellantrieb in einer zweiten Ausführungsform in einer schematischen perspektivischen Ansicht,
- Figur 8: die Lenksäule gemäß Figur 7 in einer Seitenansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

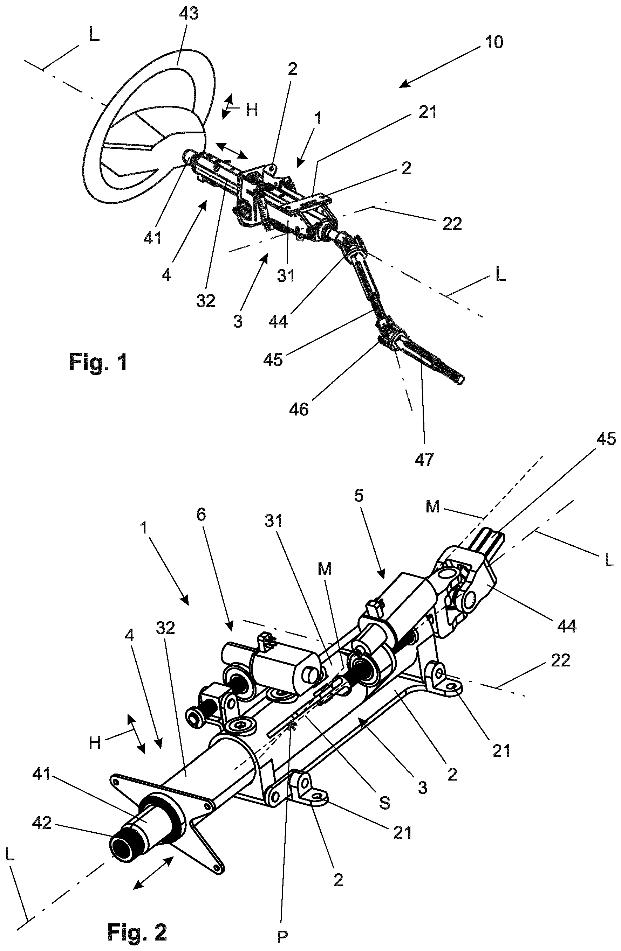

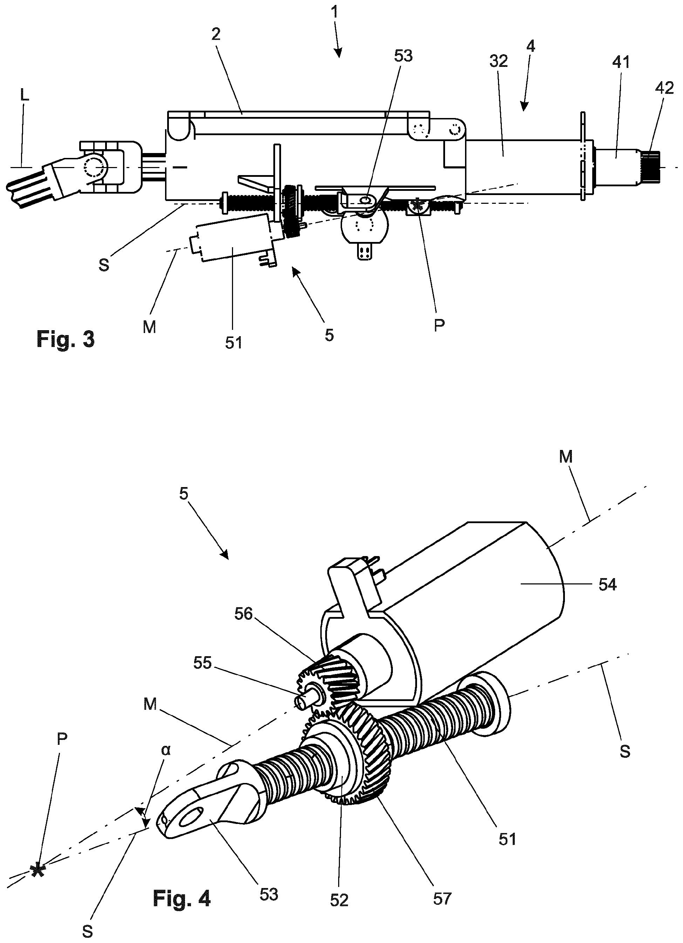

Fig. 1 zeigt in einer schematischen perspektivischen Ansicht ein Kraftfahrzeug-Lenksystem 10 umfassend eine erfindungsgemäße Lenksäule 1, die in Figur 2 in einer vergrößerten Ansicht von unten und in Figur 3 in einer Ansicht in einer Seitenansicht dargestellt ist.

Die Lenksäule 1 umfasst eine Trageinheit 2, welche Befestigungsmittel 21, beispielsweise Befestigungsöffnungen zur Befestigung an einer hier nicht gezeigten Karosserie eines Kraftfahrzeugs aufweist.

Vor der Trageinheit 2 wird eine Manteleinheit 3 gehalten, die einen Außenmantel 31 aufweist.

Eine Stelleinheit 4 umfasst einen Innenmantel 32, auch als inneres Mantelrohr bezeichnet, in dem eine Lenkspindel 41 um ihre Längsachse L drehbar gelagert ist, welche die Längsrichtung angibt. Am bezüglich der Fahrtrichtung hinteren, der Fahrerposition zugewandten Ende weist die Lenkspindel 41 einen Anbindungsabschnitt 42 auf, an dem als manuelles Lenkeingabemittel beispielsweise ein Lenkrad 43 anbringbar ist.

In einer konventionellen Lenkung ist die Lenkspindel 41 nach vorn aus der Manteleinheit 3 herausgeführt, und über ein Kreuzgelenk 44 mit einer Zwischenwelle 45 gekuppelt. Diese ist über ein weiteres Kreuzgelenk 46 mit einem zu einem nicht dargestellten Lenkgetriebe führenden Lenkwellenabschnitt 47 verbunden. In einer Steer-by-Wire-Lenksäule ist die Lenkspindel 41 nicht aus der Manteleinheit 3 herausgeführt. Ihre Drehung bei einer Lenkeingabe wird elektronisch mittels Drehsensoren erfasst, die elektromotorische Lenksteller ansteuern.

Die Stelleinheit 4 umfasst einen Innenmantel 32, der in Längsrichtung teleskopartig verstellbar in dem Außenmantel 31 aufgenommen ist. Dadurch kann die Stelleinheit 4 relativ zur Manteleinheit 3 und damit auch relativ zur Trageinheit 2 in Längsrichtung verstellt werden, wie mit dem Doppelpfeil in Längsrichtung angedeutet ist.

Der Außenmantel 31 der Manteleinheit 2 ist um eine Höhenverstellachse 22, die horizontal quer zur Längsachse L verläuft, an der Trageinheit 2 verschwenkbar gelagert. Dadurch kann die Stelleinheit 4 samt des daran angebrachten Lenkrads 43 in Höhenrichtung H verstellt werden, wie mit dem Doppelpfeil angedeutet ist. Die Höhenverstellachse 22 bildet einen vorderen Befestigungsabschnitt zwischen Manteleinheit 3 und Trageinheit 2.

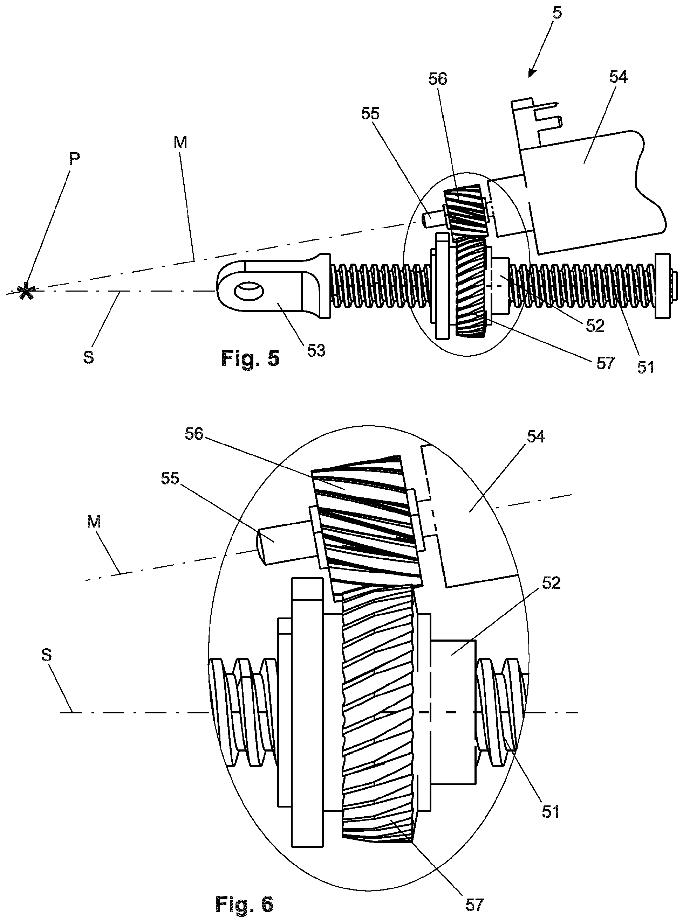

Ein erfindungsgemäßer Verstellantrieb 5 ist schematisch freigestellt in den Figuren 4, 5 und 6 gezeigt, wobei nur die erfindungswesentliche Anordnung gezeigt ist, und in der Praxis erforderliche Lager- und Halteeinrichtungen weggelassen sind.

Der Verstellantrieb 5 ist als Tauchspindelantrieb ausgebildet und umfasst eine Gewindespindel 51, die sich entlang einer Spindelachse S erstreckt und in eine Spindelmutter 52 eingreift. Die Spindelachse S ist im Wesentlichen parallel zur Längsachse L der Lenksäule 1. Die Gewindespindel 51 weist an ihrem einen Ende ein Koppelelement 53 auf, welches in Längsrichtung schubsteif mit dem Innenmantel 32 der Stelleinheit 3 verbunden ist. Die Spindelmutter 52 ist um die Spindelachse S drehbar, axial abgestützt an dem Außenmantel 31 gelagert.

Zum motorischen Antrieb ist ein elektrischer Motor 54 vorgesehen, der eine sich in Richtung einer Motorachse M erstreckende, drehend antreibbare Motorwelle 55 aufweist.

Auf der Motorwelle 55 ist ein Antriebsrad 56 drehfest angebracht, welches im Beispiel als schrägverzahntes Zahnrad ausgebildet ist. Dieses kämmt mit einem Abtriebsrad 57, welches als korrespondierendes Zahnrad ausgebildet ist, und koaxial mit der Spindelmutter 52 verbunden ist. Erfindungsgemäß stehen das Antriebsrad 56 und das Abtriebsrad 57 in direktem Getriebeeingriff, und bilden somit ein einstufiges Zahnradgetriebe mit genau zwei Zahnrädern 56 und 57.

Die Motorachse M schließt mit der Spindelachse S einen Achswinkel α ein, der ein spitzer Winkel gemäß 0° < α < 90° ist. Im gezeigten Beispiel ist α < 15°, wodurch eine besonders schlank nach vorn zusammenlaufende Bauform der Lenksäule 1 realisiert werden kann.

Wesentlich ist, dass die Motorachse M die Spindelachse S in einem Schnittpunkt P schneidet. Dieser Schnittpunkt P liegt bevorzugt innerhalb der Längserstreckung der Lenksäule 1, die definitionsgemäß in Längsrichtung von dem Anbindungsabschnitt 42 der Lenkspindel 41 und der Höhenverstellachse 22 begrenzt sein kann. Diese Lage des Schnittpunkts P ist in Figur 2 dargestellt.

Das aus dem Antriebsrad 56 und dem Abtriebsrad 57 gebildete Getriebe kann bevorzugt als Kronenradgetriebe, auch als Kronradgetriebe bezeichnet, ausgebildet sein. Dabei bildet das Abtriebsrad 57 ein Kronenrad, und das relativ dazu kleinere Antriebsrad 46 ist als zylindrisches Stirnrad ausgestaltet. Es kann eine Geradverzahnung oder eine Schrägverzahnung vorgesehen sein, wobei die Geradverzahnung den Vorteil hat, dass keine Axialkräfte auf das Antriebsrad 56 wirken.

Durch drehenden Antrieb der Spindelmutter 52 kann die Gewindespindel 51 relativ dazu in Längsrichtung verlagert werden, so dass die Stelleinheit 4 relativ zur Trageinheit 2 längs verstellt wird.

Der als Tauchspindelantrieb mit drehend antreibbarer Spindelmutter 52 gezeigte Spindeltrieb kann alternativ auch als Rotationsspindelantrieb mit drehend antreibbarer Gewindespindel 51 und relativ dazu bezüglich Rotation feststehender Spindelmutter 52 ausgebildet sein. Dabei kann die axiale Abstützung der Gewindespindel 51 und der Spindelmutter 52 bezüglich des Außenmantels 31 und des Innenmantels 32 vertauscht sein.

Ein weiterer Verstellantrieb 6 kann mit Abstand zur Höhenverstellachse 22 zwischen dem Außenmantel 31 und der Trageinheit 2 quer zur Längsachse L angreifen. Dadurch kann eine motorische Höhenverstellung der Stelleinheit 4 relativ zur Trageinheit 2 in der Höhenrichtung H realisiert sein.

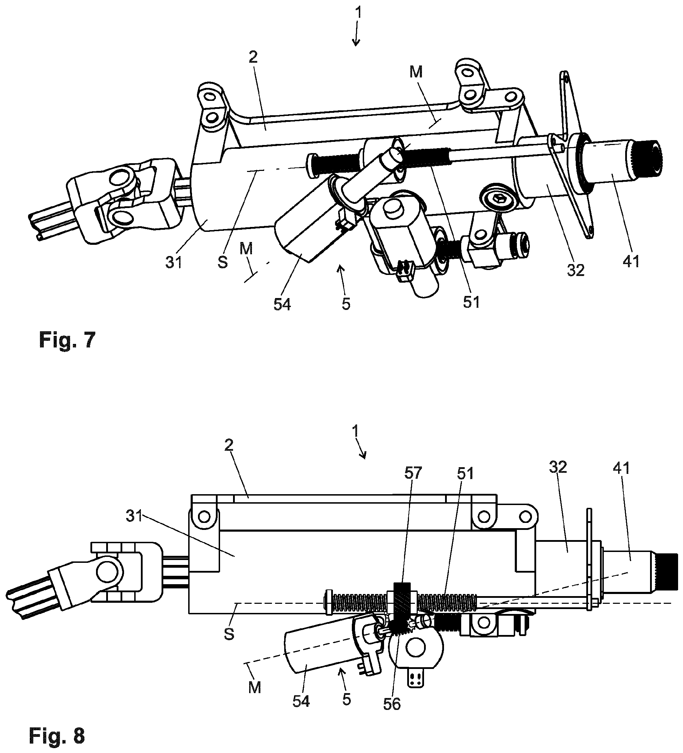

In den Figuren 7 und 8 ist eine alternative Ausführungsform gezeigt, wobei für dieselben Funktionselemente dieselben Bezugszeichen verwendet werden.

Im Unterschied zu der ersten Ausführung ist die Motorachse M relativ zur Spindelachse S windschief angeordnet, d.h. schneidet diese nicht. Dabei schließen sie ebenfalls einen Achswinkel α ein, der bevorzugt ein spitzer Winkel gemäß 0° < α < 90° sein kann.

### Bezugszeichenliste

- 1: Lenksäule
- 10: Lenksystem
- 2: Trageinheit
- 21: Befestigungsöffnungen
- 22: Höhenverstellachse
- 3: Manteleinheit
- 31: Außenmantel
- 32: Innenmantel
- 4: Stelleinheit
- 41: Lenkspindel
- 42: Anbindungsabschnitt
- 43: Lenkrad
- 44, 46: Kreuzgelenk
- 45: Zwischenwelle
- 47: Lenkwellenabschnitt
- 5: Verstellantrieb
- 51: Gewindespindel
- 52: Spindelmutter
- 53: Koppelelement
- 54: Motor
- 55: Motorwelle
- 56: Antriebsrad
- 57: Abtriebsrad

- L: Längsachse
- H: Höhenrichtung
- S: Spindelachse
- M: Motorachse
- P: Schnittpunkt
- α: Achswinkel

## Patentansprüche

1. Verstellantrieb (5) für eine motorisch verstellbare Lenksäule (1) für ein Kraftfahrzeug, umfassend einen Spindeltrieb mit einer in eine Spindelmutter (52) eingreifenden Gewindespindel (51) mit einer Spindelachse (S), und einen elektrischen Motor (54) mit einer um eine Motorachse (M) drehend antreibbaren Motorwelle (55), wobei die Motorwelle (55) über ein Zahnradgetriebe (56, 57) mit der Spindelmutter (52) oder der Gewindespindel (51) getriebemäßig gekuppelt ist,
wobei ein auf der Motorwelle (55) drehfest angebrachtes Antriebsrad (56) mit einem mit der Spindelmutter (52) oder der Gewindespindel (51) drehfest verbundenen Abtriebsrad (57) in direktem Getriebeeingriff steht,
**dadurch gekennzeichnet,**
**dass** der zwischen Spindelachse (S) und Motorachse (M) eingeschlossene Achswinkel (α) größer als 0° und kleiner als 30° ist.

2. Verstellantrieb nach Anspruch 1, **dadurch gekennzeichnet, dass** die Spindelachse (S) und die Motorachse (M) schräg zueinander stehen und sich in einem Schnittpunkt (P) schneiden.

3. Verstellantrieb nach einem der vorangehenden Ansprüche, **dadurch gekennzeichnet, dass** der zwischen Spindelachse (S) und Motorachse (M) eingeschlossene Achswinkel (α) kleiner ist als 15°.

4. Verstellantrieb nach einem der vorangehenden Ansprüche, **dadurch gekennzeichnet, dass** das Zahnradgetriebe (56, 57) als Kronenradgetriebe ausgebildet ist.

5. Verstellantrieb nach einem der vorangehenden Ansprüche 1 bis 3, **dadurch gekennzeichnet, dass** das Zahnradgetriebe (56, 57) als Kegelradgetriebe ausgebildet ist.

6. Verstellantrieb nach einem der vorangehenden Ansprüche, **dadurch gekennzeichnet, dass** der Spindeltrieb als Tauchspindeltrieb oder als Rotationsspindeltrieb ausgebildet ist.

7. Motorisch verstellbare Lenksäule (1) für ein Kraftfahrzeug, mit einer Trageinheit (2), die an einer Fahrzeugkarosserie anbringbar ist, und von der eine Stelleinheit (4) gehalten ist, in der eine Lenkspindel (41) um eine Längsachse (L) drehbar gelagert ist, und mit einem Verstellantrieb (5), der mit der Trageinheit (2) und mit der Stelleinheit (4) verbunden ist, und von dem die Stelleinheit (4) relativ zur Trageinheit (2) verstellbar ist,
**dadurch gekennzeichnet,**
**dass** der Verstellantrieb (5) ausgebildet ist gemäß zumindest einem der vorangehenden Ansprüche 1 bis 6, und dass Spindelachse (S) und Motorachse (M) sich in einem Schnittpunkt (P) schneiden, der innerhalb der Längserstreckung der Lenksäule (1) liegt.

8. Lenksäule nach Anspruch 7, **dadurch gekennzeichnet, dass** der Verstellantrieb (5) zur Längsverstellung in Richtung der Längsachse (L) zwischen der Stelleinheit (4) und der Trageinheit (2) angeordnet ist.

9. Lenksäule nach einem der Ansprüche 7 bis 8, **dadurch gekennzeichnet, dass** der Verstellantrieb (6) zur Höhenverstellung quer zur Längsachse (L) zwischen der Stelleinheit (4) und der Trageinheit (2) angeordnet ist.

10. Lenksäule nach einem der Ansprüche 7 bis 9, **dadurch gekennzeichnet, dass** die Spindelachse (S) und die Motorachse (M) sich in einem Schnittpunkt (P) schneiden, der zwischen einem hinteren Anbindungsabschnitt (42) der Lenkspindel (41) und einem vorderen Befestigungsabschnitt (22) der Trageinheit (2) liegt.

11. Lenksäule nach einem der Ansprüche 7 bis 10, **dadurch gekennzeichnet, dass** sie als Steer-by-Wire-Lenksäule ausgebildet ist.

## Claims

1. Adjustment drive (5) for a motor-adjustable steering column (1) for a motor vehicle, comprising a spindle drive with a threaded spindle (51) engaging in a spindle nut (52) and having a spindle axis (S), and an electric motor (54) with a motor shaft (55) which can be driven in rotation about a motor axis (M), the motor shaft (55) being coupled to the spindle nut (52) or the threaded spindle (51) by means of a gear mechanism (56, 57),
wherein a drive gear (56) mounted non-rotatably on the motor shaft (55) is in direct gear engagement with an output gear (57) connected non-rotatably to the spindle nut (52) or the threaded spindle (51),
**characterized in**
**in that** the axis angle (α) included between the spindle axis (S) and the motor axis (M) is greater than 0° and less than 30°.

2. Adjustment drive according to claim 1, **characterized in that** the spindle axis (S) and the motor axis (M) are at an angle to each other and intersect at a point of intersection (P).

3. Adjustment drive according to one of the preceding claims, **characterized in that** the axis angle (α) included between the spindle axis (S) and the motor axis (M) is smaller than 15°.

4. Adjustment drive according to one of the preceding claims, **characterized in that** the gear drive (56, 57) is designed as a crown gear drive.

5. Adjustment drive according to one of the preceding claims 1 to 3, **characterized in that** the gearwheel transmission (56, 57) is designed as a bevel gear.

6. Adjustment drive according to one of the preceding claims, **characterized in that** the spindle drive is designed as a submerged spindle drive or as a rotary spindle drive.

7. Motor-adjustable steering column (1) for a motor vehicle, having a support unit (2) which can be attached to a vehicle body and by which an adjusting unit (4) is held, in which a steering spindle (41) is mounted rotatably about a longitudinal axis (L), and having an adjustment drive (5) which is connected to the support unit (2) and to the adjusting unit (4) and by which the adjusting unit (4) can be adjusted relative to the support unit (2),
**characterized in**
**in that** the adjustment drive (5) is designed in accordance with at least one of the preceding claims 1 to 6, and **in that** the spindle axis (S) and motor axis (M) intersect at a point of intersection (P) which lies within the longitudinal extent of the steering column (1).

8. Steering column according to claim 7, **characterized in that** the adjustment drive (5) for longitudinal adjustment in the direction of the longitudinal axis (L) is arranged between the adjusting unit (4) and the support unit (2).

9. Steering column according to one of claims 7 to 8, **characterized in that** the adjustment drive (6) for height adjustment transversely to the longitudinal axis (L) is arranged between the adjusting unit (4) and the support unit (2).

10. Steering column according to one of claims 7 to 9, **characterized in that** the spindle axis (S) and the motor axis (M) intersect at a point of intersection (P), which lies between a rear attachment section (42) of the steering spindle (41) and a front attachment section (22) of the support unit (2).

11. Steering column according to one of claims 7 to 10, **characterized in that** it is designed as a steer-by-wire steering column.

## Revendications

1. Entraînement de réglage (5) pour une colonne de direction (1) réglable par moteur pour un véhicule automobile, comprenant un entraînement à broche avec une broche filetée (51) s'engageant dans un écrou de broche (52) avec un axe de broche (S), et un moteur électrique (54) avec un arbre de moteur (55) pouvant être entraîné en rotation autour d'un axe de moteur (M), l'arbre de moteur (55) étant couplé en entraînement avec l'écrou de broche (52) ou la broche filetée (51) par l'intermédiaire d'une transmission à engrenages (56, 57),
une roue d'entraînement (56) montée solidairement en rotation sur l'arbre moteur (55) étant en prise d'engrenage directe avec une roue de sortie (57) reliée solidairement en rotation à l'écrou de broche (52) ou à la broche filetée (51),
**caractérisé en ce que**
que l'angle axial (α) compris entre l'axe de la broche (S) et l'axe du moteur (M) est supérieur à 0° et inférieur à 30°.

2. Entraînement de réglage selon la revendication 1, **caractérisé en ce que** l'axe de la broche (S) et l'axe du moteur (M) sont inclinés l'un par rapport à l'autre et se coupent en un point d'intersection (P).

3. Entraînement de réglage selon l'une des revendications précédentes, **caractérisé en ce que** l'angle d'axe (α) compris entre l'axe de broche (S) et l'axe de moteur (M) est inférieur à 15°.

4. Entraînement de réglage variable selon l'une des revendications précédentes, **caractérisé en ce que** l'engrenage (56, 57) est conçu comme un engrenage à couronne.

5. Entraînement de réglage selon l'une des revendications précédentes 1 à 3, **caractérisé en ce que** l'engrenage (56, 57) est conçu comme un engrenage conique.

6. Entraînement de réglage selon l'une des revendications précédentes, **caractérisé en ce que** l'entraînement à vis est réalisé sous forme d'entraînement à vis plongeante ou d'entraînement à vis rotative.

7. Colonne de direction (1) réglable par moteur pour un véhicule automobile, comprenant une unité de support (2) qui peut être montée sur une carrosserie de véhicule et par laquelle est maintenue une unité de réglage (4) dans laquelle un arbre de direction (41) est monté à rotation autour d'un axe longitudinal (L), et comprenant un entra nement de réglage (5) qui est relié à l'unité de support (2) et à l'unité de réglage (4) et par lequel l'unité de réglage (4) peut être réglée par rapport à l'unité de support (2),
**caractérisé en ce que**
**en ce que** l'entraînement de réglage (5) est réalisé selon au moins l'une des revendications précédentes 1 à 6, et **en ce que** l'axe de broche (S) et l'axe de moteur (M) se coupent en un point d'intersection (P) qui se situe à l'intérieur de l'extension longitudinale de la colonne de direction (1).

8. Colonne de direction selon la revendication 7, **caractérisée en ce que** l'entraînement de réglage (5) pour le réglage longitudinal dans la direction de l'axe longitudinal (L) est disposé entre l'unité de réglage (4) et l'unité de support (2).

9. Colonne de direction selon l'une des revendications 7 à 8, **caractérisée en ce que** l'actionneur (6) de réglage en hauteur est disposé transversalement à l'axe longitudinal (L) entre l'unité de réglage (4) et l'unité de support (2).

10. Colonne de direction selon l'une quelconque des revendications 7 à 9, **caractérisée en ce que** l'axe de l'arbre de direction (S) et l'axe du moteur (M) se coupent en un point d'intersection (P) situé entre une portion de liaison arrière (42) de l'arbre de direction (41) et une portion de fixation avant (22) de l'unité de support (2).

11. Colonne de direction selon l'une quelconque des revendications 7 à 10, **caractérisée en ce qu'**elle est conçue comme une colonne de direction steer-by-wire.
